# EUROPEAN PATENT SPECIFICATION

(11) **EP 1 953 036 B1**
(45) Date of publication and mention of the grant of the patent: **28.07.2010**
(21) Application number: 07121198.1
(22) Date of filing: 21.11.2007
(51) Int. Cl.: B60N 2/48

(54) **Automobile seat**
Fahrzeugsitz
Siège d'automobile

(30) Priority: 01.02.2007 JP 2007022858
(43) Date of publication of application: 06.08.2008
(73) Proprietor: Delta Kogyo Co., Ltd., Aki-gun, Hiroshima 735-8501 (JP)
(72) Inventor: Oki, Yasukazu, Aki-gun Hiroshima 735-8501 (JP)
(74) Representative: Eisenführ, Speiser & Partner

(56) References cited:
- JP-A- 2001 039 194
- US-A1- 2004 155 496

## Description

### BACKGROUND OF THE INVENTION

### 1. Field of the Invention

The present invention relates to an automobile seat provided with a whiplash injury preventing mechanism that is capable of preventing a seat occupant from suffering a whiplash injury when an automotive vehicle has come into a rear-end collision.

In particular the present invention relates to an automobile seat according to the preamble of claim 1. Such a seat is known from US 2004/0155496 A1.

### 2. Description of the Related Art

Automobile seats generally have a headrest mounted on an upper portion of a seat back. When a user sits on a seat, a predetermined clearance is present between the user's head and the headrest, but when an automobile vehicle has come into a rear-end collision, the user's body moves forwards, while the user's head remains back. Accordingly, a load is applied to the user's neck, resulting in a whiplash injury.

It is possible to reduce the clearance between the user's head and the headrest to minimize the injury. In this case, however, the user's head is often brought into contact with the headrest even in the normal sitting condition, and even a slight movement of the head causes the head to interfere with the headrest, making the user uncomfortable.

A so-called whiplash injury preventing mechanism has been proposed having a headrest pivotally mounted on a seat back, connected to a pressure portion, and always biased rearwards by a coil spring, wherein the headrest that has been brought into contact with the head is immediately returned to its original position after a rear-end collision and, hence, a load is also applied to the user's neck (see, for example, Document 1).

Another whiplash injury preventing mechanism has been proposed that acts, in the event of a rear-end collision, to move the headrest forwards and hold the headrest at a forward position (see, for example, Document 2 or 3).
Document 1: Japanese Laid-Open Patent Publication No. 2001-39194
Document 2: Japanese Laid-Open Patent Publication No. 2001-163097
Document 3: Japanese Laid-Open Patent Publication No.2002-274240

In the case of the automobile seat as disclosed in Document 2 or 3, however, the user cannot recognize from the appearance thereof whether or not the whiplash injury preventing mechanism has operated, and if the user drives an automotive vehicle under the condition in which the whiplash injury preventing mechanism has operated, the whiplash injury preventing mechanism does not function.

The automobile seats are generally placed on a seat sliding device that is used to slide the seat back and forth, and the whiplash injury preventing mechanism is sometimes caused to operate with an impact that may be generated when the seat is moved to a rearmost end thereof upon operation of the seat sliding device. In this case also, the user cannot recognize whether or not the whiplash injury preventing mechanism has operated and, hence, the aforementioned problem occurs.

### SUMMARY OF THE INVENTION

The present invention has been developed to overcome the above-described disadvantages.

It is accordingly an objective of the present invention to provide an automobile seat provided with a whiplash injury preventing mechanism that enables the user to easily recognize whether or not the whiplash injury preventing mechanism has operated in an inexpensive manner.

In accomplishing the above and other objectives, the automobile seat according to the present invention includes a seat cushion having a seat cushion frame, a seat back tiltably mounted on the seat cushion, and a headrest mounted on an upper portion of the seat back. The automobile seat also includes a pair of side frames mounted on the seat cushion frame, a seat back frame mounted on the pair of side frames so as to be swingable within a limited range of angle, and a recognition mechanism mounted on the seat back frame. The seat back frame is, in a normal sitting condition, held on the pair of side frames at a first position, and when a load greater than a predetermined value is inputted from behind, the seat back frame swings toward a second position different from the first position to thereby move the headrest forwards. This fact can be recognized by the recognition mechanism.

The automobile seat further includes a pole guide secured to the seat back frame for support of the headrest, wherein the recognition mechanism includes a recognition mark provided on the pole guide, and the recognition mark moves up along with the pole guide with the swinging motion of the seat back frame.

Alternatively, the recognition mechanism includes an indicator mounted on the seat back frame at a location confronting one of the pair of side frames. The indicator can be viewed from outside for recognition of the swinging motion of the seat back frame. In this case, the recognition mechanism preferably includes an indicator guide mounted on the one of the pair of side frames to guide the indicator, wherein the swinging motion of the seat back frame can be recognized with a movement of the indicator relative to the indicator guide.

Again alternatively, the recognition mechanism includes a vertically movable member mounted on one of the pair of side frames and a link mechanism connected to the vertically movable member to move the vertically movable member for recognition of the swinging motion of the seat back frame. In this case, the recognition mechanism also includes a cable for connecting the vertically movable member and the link mechanism to each other, wherein the swinging motion of the seat back frame is transmitted to the vertically movable member via the cable,

According to the present invention, because a recognition means is provided on a portion of the seat back to recognize the swinging motion of the seat back frame, whether or not a swinging mechanism of the seat back frame, i.e., a whiplash injury preventing mechanism has operated can be easily recognized in an inexpensive manner.

### BRIEF DESCRIPTION OF THE DRAWINGS

The above and other objectives and features of the present invention will become more apparent from the following description of preferred embodiments thereof with reference to the accompanying drawings, throughout which like parts are designated by like reference numerals, and wherein:
Fig. 1 is an exploded perspective view of a seat back constituting an automobile seat according to a first embodiment of the present invention;
Fig. 2 is an exploded perspective view of a portion of the seat back of Fig. 1;
Fig. 3 is another exploded perspective view of the portion of the seat back of Fig. 1;
Fig. 4A is a side view of the automobile seat under a normal sitting condition;
Fig. 4B is a view similar to Fig. 4A, but depicting a condition in the event of a rear-end collision;
Fig. 5A is a side view of the seat back of Fig. 1 under the normal sitting condition, particularly depicting a portion thereof between the seat back and a headrest;
Fig. 5B is a view similar to Fig. 5A, but depicting the condition in the event of the rear-end collision;
Fig. 5C is a front view of a pole guide mounted on a seat back frame;
Fig. 6 is an exploded perspective view of a mechanism according to a second embodiment of the present invention for use in recognizing the operation of a whiplash injury preventing mechanism;
Fig. 7 is a sectional view of a mechanism according to a third embodiment of the present invention for use in recognizing the operation of the whiplash injury preventing mechanism, particularly depicting the normal sitting condition;
Fig. 8 is a view similar to Fig. 7, but depicting a condition after the whiplash injury preventing mechanism has operated; and
Fig. 9 is an exploded perspective view of the mechanism of Fig. 7.

### DETAILED DESCRIPTION OF THE PREFERRED EMBODIMENTS

This application is based on an application No. 2007-022858 filed February 1, 2007 in Japan.

### Embodiment 1.

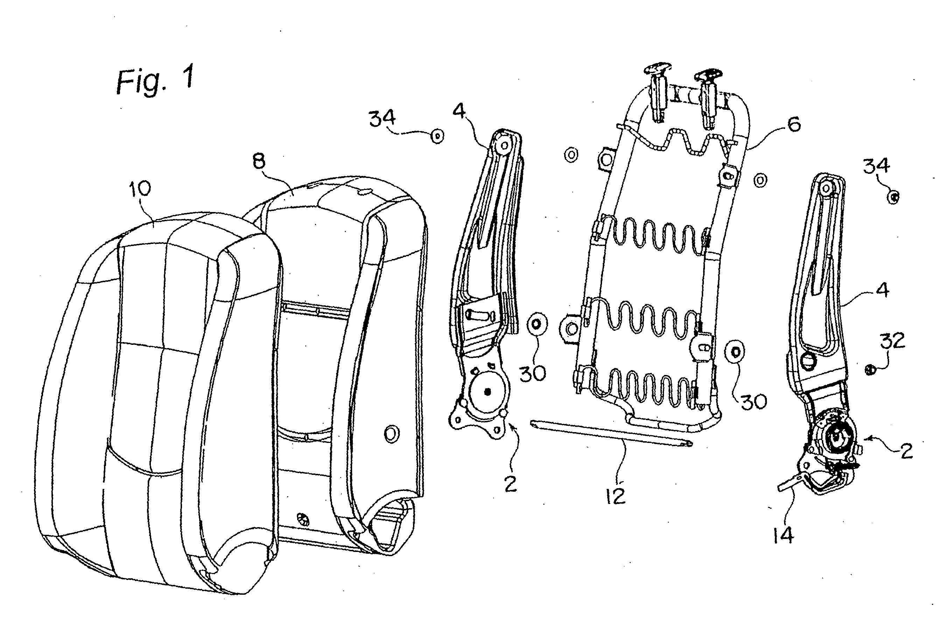

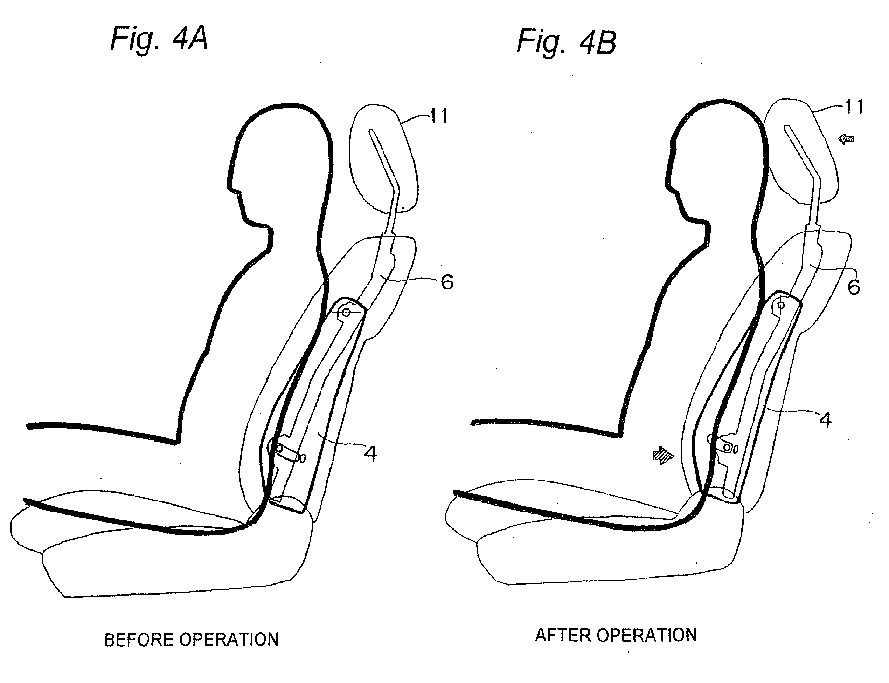

Fig. 1 depicts a seat back of an automobile seat according to a first embodiment of the present invention, which is tiltably mounted on a seat cushion (not shown). The seat back includes a pair of side frames 4 mounted on a seat cushion frame (not shown) via respective recliner adjusters 2, a seat back frame 6 mounted on the pair of side frames 4, a pad material 8 mounted on the seat back frame 6, and a skin material 10 covered on the pad material 8. A headrest 11 (see Fig. 4) is mounted on an upper portion of the seat back frame 6.

The pair of recliner adjusters 2 are connected to each other via a connecting shaft 12. Operation of an operation lever 14 mounted on one of the recliner adjusters 2 allows the side frames 4 to be set to a desired angle.

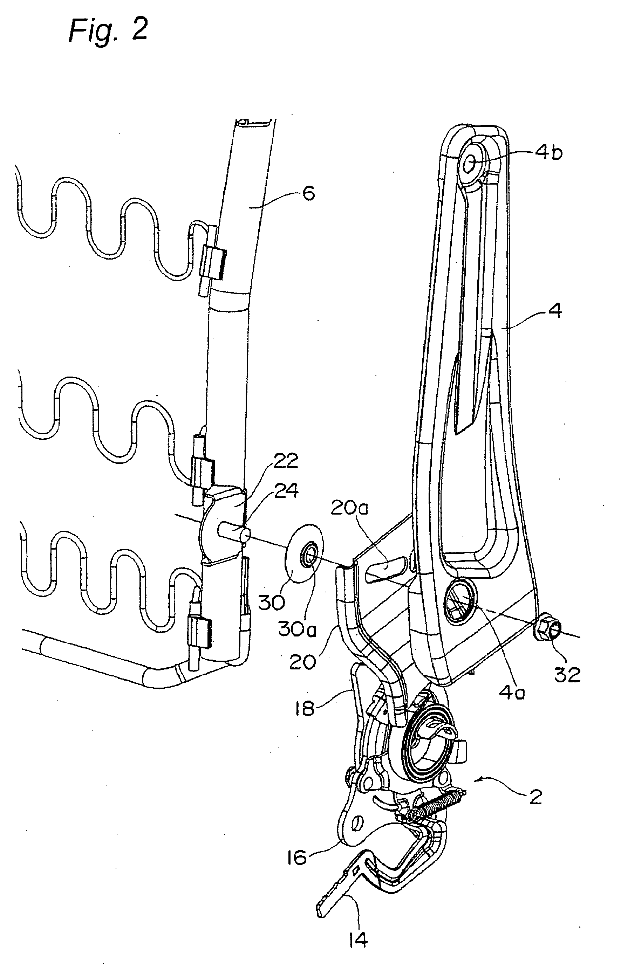

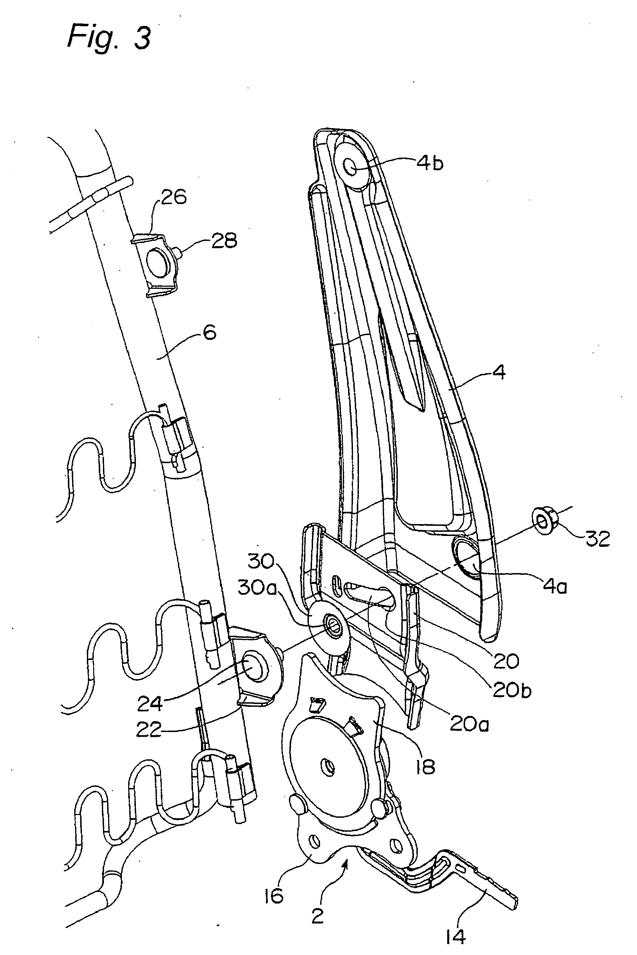

As shown in Figs. 2 and 3, each of the recliner adjusters 2 includes a lower bracket 16 secured to the seat cushion frame and an upper bracket 18 rotatable relative to the lower bracket 16. Because the present invention does not aim after the recliner adjusters 2, detailed description thereof is omitted.

An inner side frame 20 is secured to the upper bracket 18 and has a guide groove (guide portion) 20a defined therein in which a bolt (explained later) secured to the seat back frame 6 is loosely inserted. The inner side frame 20 also has a recess (elastic member holder) 20b formed at a front end of the guide groove 20a for holding an elastic member (explained later), Each side frame 4 is secured to an upper portion of the inner side frame 20 and has a nut insertion hole 4a defined therein at a location confronting the recess 20b in the inner side frame 20. The side frame 4 also has a bolt insertion hole 4b formed in an upper portion thereof. The guide groove 20a referred to above is formed into an arcuated and elongated shape having a center of curvature at the bolt insertion hole 4b.

The seat back frame 6 includes a bracket 22 secured thereto at a location confronting the recess 20b in the inner side frame 20 and a first bolt 24 secured to the bracket 22 so as to protrude toward the recess 20b. The seat back frame 6 also includes another bracket 26 secured thereto at a location confronting the bolt insertion hole 4b in the side frame 4 and a second bolt 28 secured to the bracket 26 so as to protrude toward the bolt insertion hole 4b. As explained later, the second bolt 28 acts as a center of swinging motion about which the seat back frame 6 swings within a limited range of angle.

When the seat back frame 6 is mounted on the side frame 4 and the inner side frame 20, the first bolt 24 is inserted into a center hole 30a defined in a coned disc spring 30 and into a center hole (front end of the guide groove 20a) of the recess 20b in the inner side frame 20, while the second bolt 28 is inserted into the bolt insertion hole 4b in the side frame 4. Thereafter, a first nut 32 is screwed onto the first bolt 24 through the nut insertion hole 4a in the side frame 4, while a second nut 34 is similarly screwed onto the second bolt 28.

The coned disc spring 30 is employed as an elastic member or a spring member and has a radially inner end protruding outwards so as to engage in a coned surface of the recess 20b that has a shape complementary to that of the inner end of the coned disc spring 30. A radially outer end of the coned disc spring 30 is held in contact with a planar surface of the bracket 22.

In the automobile seat of the above-described construction, the coned disc spring 30 is held in the recess 20b in the inner side frame 20 in the normal condition. Accordingly, the seat back frame 6 is fixed to the side frame 4, and the upper part of the user's body is supported by the seat back frame 6. The headrest 11 mounted on the upper portion of the seat back frame 6 is spaced a predetermined distance away from the user's head.

On the other hand, where a load greater than a predetermined value is inputted to the seat from behind in the event of, for example, a rear-end collision, the user's body is pressed to the seat back. At this moment, a rearward movement of the user's body causes the lumbar part to push a lower portion of the seat back frame 6 rearwards, and upon deformation (compression) the coned disc spring 30 leaves the recess 20b in the inner side frame 20 and moves together with the first bolt 24 toward the rear end of the guide groove 20a along the guide groove 20a. Accordingly, the seat back frame 6 swings with the second bolt 28 as a center of swinging motion, and the headrest 11 moves toward the user's head to support it.

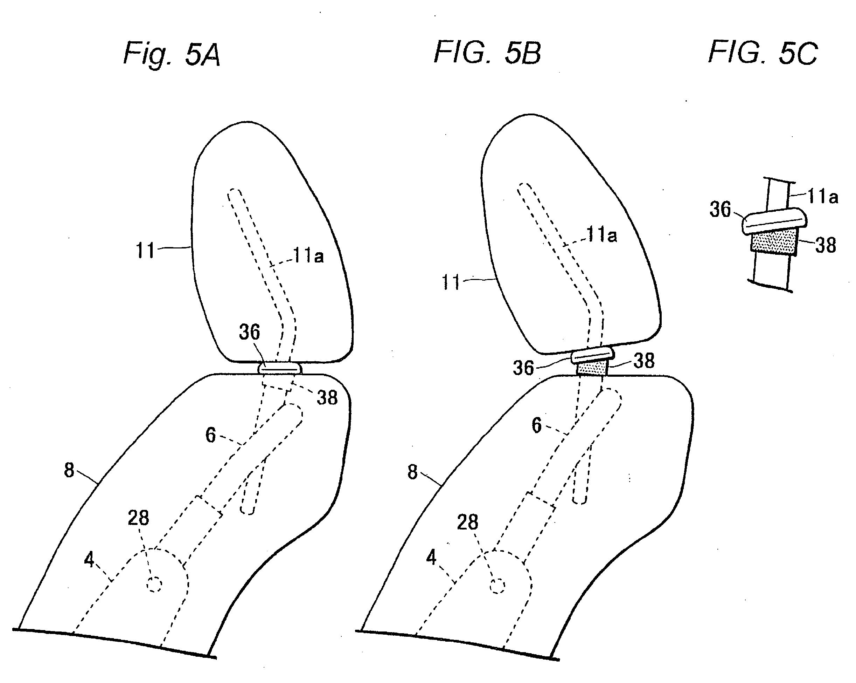

Fig. 4A depicts the normal sitting condition, and Fig. 4b depicts a condition in the event of the rear-end collision in which the seat back frame 6 and the headrest 11 have been both shifted. Figs. 5A and 5B depict that portion of the seat back on which the headrest 11 is mounted under the normal sitting condition and in the event of the rear-end collision, respectively. Fig. 5C depicts a pole guide 36 in which a pole 11 a of the headrest 11 is received to thereby support the headrest 11.

The pole guide 36 is secured to the seat back frame 6 and has a recognition mark (recognition means) 38 provided on an upper portion thereof, which indicates that a swinging mechanism of the seat back frame 6 (whiplash injury preventing mechanism) is in operation.

More specifically, as shown in Fig. 5A depicting the normal sitting condition, a head of the pole guide 36 protrudes slightly from the skin material 10, and the recognition mark 38 cannot be recognized from outside. On the other hand, when the seat back frame 6 swings about the second bolt 28 in the event of a rear-end collision, an upper portion of the seat back frame 6 moves forwardly and obliquely upwardly as shown in Fig. 5B and, hence, the pole guide 36 secured to the seat back frame 6 similarly moves forwardly and obliquely upwardly. Accordingly, the recognition mark 38 that has been hidden by the skin material 10 moves up to a position where the recognition mark 38 can be viewed from outside and enables the user to easily recognize from outside that the whiplash injury preventing mechanism has operated.

Although the distance between the first bolt 24 and the second bolt 28 is set to be greater than the distance between the second bolt 28 and the headrest 11, when a load of the user's head is applied to the headrest 11 with a delay in the event of the rear-end collision, the lumbar part is pushed forwards and the headrest 11 moves toward its original position. However, the deformation of the coned disc spring 30 in the event of the rear-end collision is a deformation within an elastic range and, hence, a resistance is created to some extent, making it possible to reduce the load on the user's neck.

Rear-end collision tests carried out up to this time revealed that a load applied to the human body is high at the lumbar part first and then becomes high at the chest and at the head. According to the present invention, once the load applied to the lumber part becomes high, the whiplash injury preventing mechanism acts to first move the headrest 11 forwards to support the head. Thereafter, when the load applied to the chest or the head becomes high, the coned disc spring 30 returns to its original position, while absorbing a shock applied to the chest or the head (rebound).

In the case where the headrest 11 cannot return to its original position, the user can know this fact by viewing the recognition mark 38 of the pole guide 36 as described above. In this case, application of a rearward load to the headrest 11 or application of a forward load to a lower portion of the seat back frame 6 causes the first bolt 24 and the coned disc spring 30 to move forwards along the guide groove 20a, and the coned disc spring 30 returns to its original position and is again held in the recess 20b.

### Embodiment 2.

Although in the above-described first embodiment the guide groove 20a for the first bolt 24 is formed in the inner side frame 20, the guide groove may be formed in a portion of the side frame that is unitarily formed with the inner side frame.

Such a construction is discussed in this embodiment with another example of the recognition means.

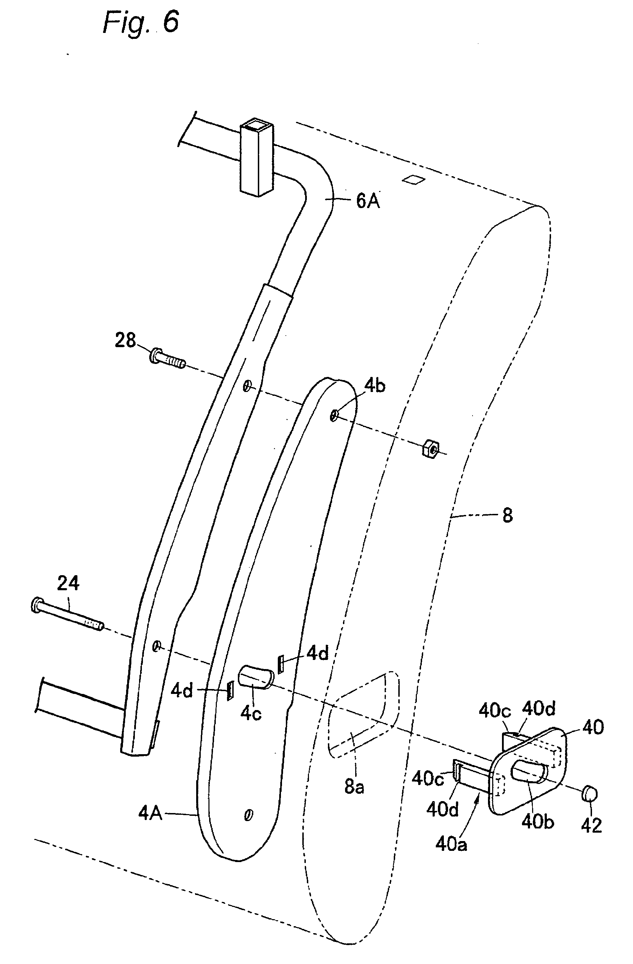

As is the case with the first embodiment referred to above, in the second embodiment as shown in Fig. 6, a first bolt 24 and a second bolt 28 employed as a hinge are both secured to a seat back frame 6A. A guide groove 4c for insertion of the first bolt 24 thereinto and a bolt insertion hole 4b for insertion of the second bolt 28 thereinto are both formed in a side frame 4A, and two mounting holes 4d in which two legs 40a of an indicator guide 40 are received are formed in front of and behind the guide groove 4c, respectively. Although Fig. 6 does not depict an elastic member such as a coned disc spring, the elastic member is mounted on the first bolt 24 as in the first embodiment.

The indicator guide 40 is planar and has a generally rectangular shape. The indicator guide 40 also has a bolt insertion hole 40b of a shape substantially identical with the guide groove 4c in the side frame 4A at a location confronting the guide groove 4c. The two legs 40a are spaced away from each other at a predetermined interval (equal to the interval between the two mounting holes 4d in the side frame 4A) and extend from the indicator guide 40 toward the side frame 4A. Each leg 40a has an engaging portion 40c formed at a distal end thereof and an engaging groove 40d defined therein adjacent the engaging portion 40c on the side of the indicator guide 40.

The pad material 8 has an opening 8a of a shape substantially identical with the shape of the indicator guide 40, and the skin material 10 (not shown in Fig. 6) similarly has an opening of such a shape.

In mounting the indicator guide 40 of the above-described construction, each leg 40a is first opposed to a corresponding one of the two mounting holes 4d in the side frame 4A through the opening in the skin material 10 and through the opening 8a in the pad material 8. Under such condition, when the indicator guide 40 is pressed toward the mounting holes 4d, side edges of the mounting holes 4d are received in the corresponding engaging grooves 40d upon inward deformation of the legs 40a, which in turn spread by virtue of an elastic force thereof, and the engaging portions 40c thereof hold the indicator guide 40 in position.

At this moment, the first bolt 24 is loosely inserted in the guide groove 4c in the side frame 4A and also in the bolt insertion hole 40b in the indicator guide 40. An indicator 42 is then mounted atop the first bolt 24, and the user can know the position of the indicator 42 with respect to the indicator guide 40 from outside, making it possible to recognize from the appearance of the seat whether or not the whiplash injury preventing mechanism is in operation.

The indicator 42 indicates the normal sitting condition when the indicator 42 is positioned at a forward end of the bolt insertion hole 40b and also indicates the operated condition of the whiplash injury preventing mechanism when the indicator 42 is positioned at a rearward end of the bolt insertion hole 40b. Accordingly, the condition of the whiplash injury preventing mechanism can be readily recognized by indicating such positions on the indicator guide 40 with the words "Initial Position" and "Operated", respectively.

Even if a transparent cover is provided on the opening of the skin material 10 without the provision of the indicator guide 40, similar effects can be offered because the indicator 42 can be viewed through the transparent cover.

### Embodiment 3.

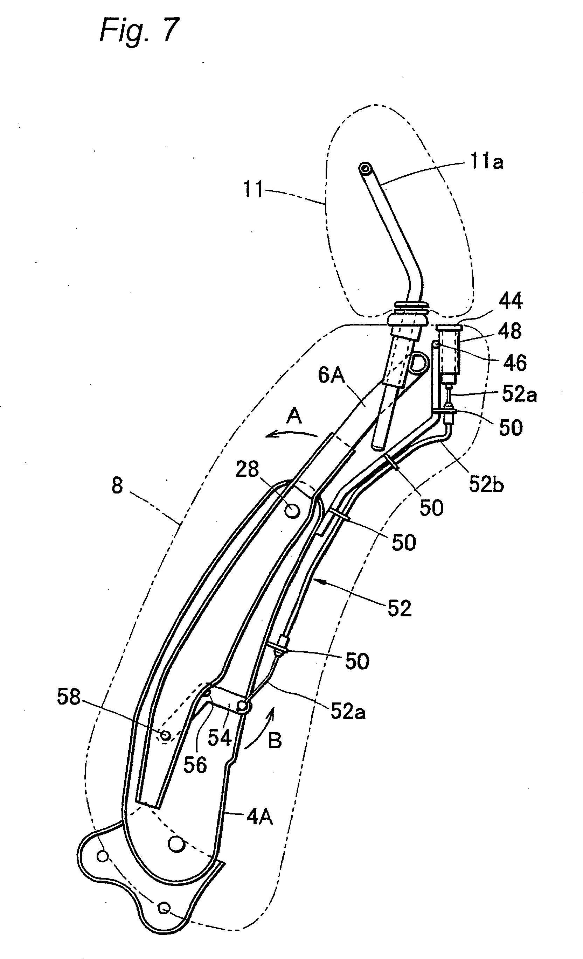

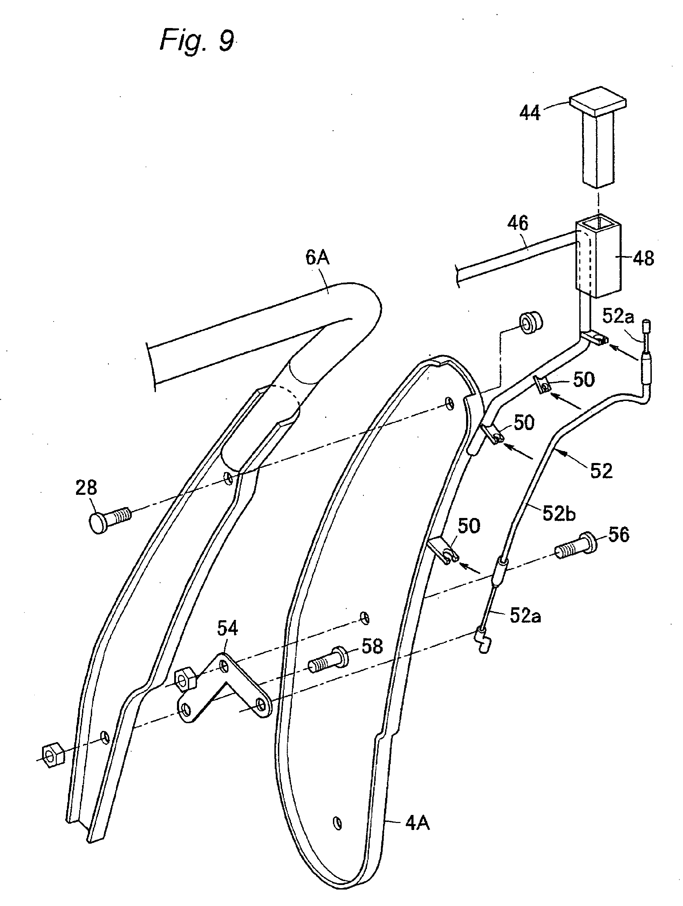

Figs. 7 to 9 depict another example of the recognition means, and this recognition means is discussed hereinafter along with a link mechanism for operating the same.

In this embodiment, a vertically movable member 44 employed as the recognition means is mounted on the side frame 4A so as to be vertically movable depending on the condition of the whiplash injury preventing mechanism.

More specifically, a support member 46 is joined to an upper portion of the side frame 4A, and a guide member 48 and a plurality of cable fixing members 50 are secured to the support member 46. The vertically movable member 44 is vertically movably mounted on the guide member 48 and connected at one end (lower end) thereof to one end of an inner cable 52a that constitutes a wire cable 52. An outer cable 52b also constituting the wire cable 52 is held at intermediate portions thereof by the plurality of cable fixing members 50. The other end of the inner cable 52a is connected to one end of an L-shaped link 54.

The L-shaped link 54 is pivotally mounted at an intermediate portion thereof to the side frame 4A via a bolt 56 and also pivotally mounted at the other end thereof to the seat back frame 6A via a bolt 58.

In the third embodiment referred to above, in the normal sitting condition as shown in Fig. 7, the vertically movable member 44 employed as the recognition means is positioned at a lowermost position thereof, and the head of the vertically movable member 44 is substantially flush with an upper surface of the seat back (skin material 10).

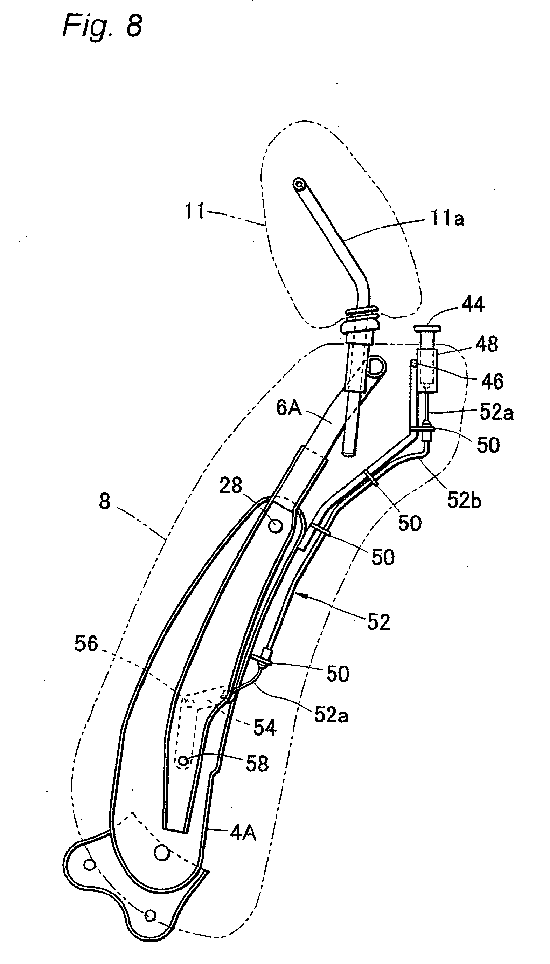

Under such condition, when a rear-end collision occurs, the seat back frame 6A swings about the second bolt 28 in a direction shown by an arrow A in Fig. 7, resulting in rotation of the L-shaped link 54 in a direction shown by an arrow B. Accordingly, as shown in Fig. 8, the inner cable 52a of the wire cable 52 is pushed upwardly by the L-shaped link 54, and the vertically movable member 44 is moved upwardly along the guide member 48, thereby enabling the user to recognize the operation of the whiplash injury preventing mechanism from outside.

After the operation of the whiplash injury preventing mechanism, if the whiplash injury preventing mechanism does not return to the original condition thereof, application of a rearward load to the headrest 11 or application of a forward load to a lower portion of the seat back frame 6A causes the first bolt 24 to move forwards along the guide groove 4c. At the same time, the L-shaped link 54 rotates in a direction counter to the direction of the arrow B, which in turn causes the inner cable 52a of the wire cable 52 to move downwardly. As a result, the vertically movable member 44 is moved downwardly and returns to an initial position thereof (the lowermost position of the guide member 48).

Although in the above-described embodiments the coned disc spring 30 is employed as an elastic member, the coned disc spring may have a plurality of radially extending protrusions that have been designed to be held in contact with a planar surface of the bracket 22. Alternatively, a guide member such as, for example, a washer made of a resin or metal and having a coned slope may be placed between the recess 20b and the coned disc spring 30 or the coned disc spring having the plurality of radially extending protrusions. Any other suitable elastic member such as a plate spring or the like may be used as the elastic member.

In the automobile seat having a whiplash injury preventing mechanism according to the present invention, the whiplash injury preventing mechanism operates in the even of a rear-end collision, and even if the whiplash injury preventing mechanism does not return to the original condition thereof after the rear-end collision, the condition of the whiplash injury preventing mechanism can be readily recognized by viewing the recognition means. Accordingly, the automobile seat according to the present invention is useful for automobiles for general users.

Although the present invention has been fully described by way of examples with reference to the accompanying drawings, it is to be noted here that various changes and modifications will be apparent to those skilled in the art.

## Claims

1. An automobile seat including a seat cushion having a seat cushion frame, a seat back tiltably mounted on the seat cushion, and a headrest (11) mounted on an upper portion of the seat back, said automobile seat comprising:
a pair of side frames (4) mounted on the seat cushion frame;
a seat back frame (6) mounted on the pair of side frames (4) so as to be swingable within a limited range of angle;
wherein the seat back frame (6) in a normal sitting condition, held on the pair of side frame (4) at a first position, and when a load greater than a predetermined value is inputted from behind, the seat back frame (6) swings toward a second position different from the first position to thereby move the headrest forwards;
**characterised by**
a recognition mechanism (38; 40, 42; 44) mounted on the seat back frame;
wherein a fact that the seat back frame (6) as swung about a center of swinging motion can be recognized with the recognition mechanism.

2. The automobile seat according to claim 1, further comprising a pole guide (36) secured to the seat back frame (6) for support of the headrest, wherein the recognition mechanism comprises a recognition mark provided on the pole guide (36), and the recognition mark moves up along with the pole guide (36) with the swinging motion of the seat back frame (6).

3. The automobile seat according to claim 1, wherein the recognition mechanism comprises an indicator (42) mounted on the seat back frame (6) at a location confronting one of the pair of side frames (4), and wherein the indicator (42) can be viewed from outside for recognition of the swinging motion of the seat back frame (6).

4. The automobile seat according to claim 3, wherein the recognition mechanism comprises an indicator guide (40) mounted on the one of the pair of side frames (4) to guide the indicator (42), and wherein the swinging motion of the seat back frame (6) can be recognized with a movement of the indicator (42) relative to the indicator guide (40).

5. The automobile seat according to claim 1, wherein the recognition mechanism comprises a vertically movable member (44) mounted on one of the pair of side frames (4) and a link mechanism connected to the vertically movable member to move the vertically movable member for recognition of the swinging motion of the seat back frame (6).

6. The automobile seat according to claim 5, wherein the recognition mechanism comprises a cable (52) for connecting the vertically movable member and the link mechanism to each other, and wherein the swinging motion of the seat back frame (6) is transmitted to the vertically movable member via the cable (52).

## Patentansprüche

1. Autositz, welcher ein Sitzkissen einschließt, das einen Sitzkissenrahmen aufweist, eine Rückenlehne, die kippbar an dem Sitzkissen befestigt ist, und eine Kopfstütze (11), die auf einem oberen Abschnitt der Rückenlehne befestigt ist, wobei der Autositz folgendes umfasst:
ein Paar von Seitenrahmen (4), die an dem Sitzkissenrahmen befestigt sind;
einen Rückenlehnenrahmen (6), der auf dem Paar von Seitenrahmen (4) befestigt ist, um innerhalb eines begrenzten Winkelbereichs schwenkbar zu sein;
wobei der Rückenlehnenrahmen (6) in einem normalen Sitzzustand in einer ersten Position auf dem Paar von Seitenrahmen (4) gehalten wird, und wenn eine Belastung, größer als ein vorbestimmter Wert von hinten zugeführt wird, der Rückenlehnenrahmen (6) in Richtung auf eine zweite Position schwenkt, die sich von der ersten Position unterscheidet, um auf diese Weise die Kopfstütze vorwärts zu bewegen;
**gekennzeichnet durch**
einen Erkennungsmechanismus (38; 40, 42; 44), der auf dem Rückenlehnenrahmen befestigt ist;
wobei ein Umstand, dass der Rückenlehnenrahmen (6) um einen Mittelpunkt der Schwenkbewegung geschwenkt wurde, mit dem Erkennungsmechanismus erkannt werden kann.

2. Autositz nach Anspruch 1, ferner umfassend eine Stangenführung (36), die an dem Rückenlehnenrahmen (6) befestigt ist, um die Kopfstütze zu halten, wobei der Erkennungsmechanismus eine Erkennungsmarkierung umfasst, die auf der Stangenführung (36) vorgesehen ist, und die Erkennungsmarkierung zusammen mit der Stangenführung (36) mit der Schwenkbewegung des Rückenlehnenrahmens (6) vorrückt.

3. Autositz nach Anspruch 1, wobei der Erkennungsmechanismus einen Indikator (42) umfasst, der auf dem Rückenlehnenrahmen (6) befestigt ist, an einem Ort, gegenüber einem von dem Paar von Seitenrahmen (4), und wobei der Indikator (42) zur Erkennung der Schwenkbewegung des Rückenlehnenrahmens (6) von außen eingesehen werden kann.

4. Autositz nach Anspruch 3, wobei der Erkennungsmechanismus eine Indikatorführung (40) umfasst, die auf dem einen von dem Paar von Seitenrahmen (4) befestigt ist, um den Indikator (42) zu führen, und wobei die Schwenkbewegung des Rückenlehnenrahmens (6) mit einer Bewegung des Indikators (42) relativ zu der Iridikatorführung (40) erkannt werden kann.

5. Autositz nach Anspruch 1, wobei der Erkennungsmechanismus ein vertikal bewegbares Element (44) umfasst, das auf dem einen von dem Paar von Seitenrahmen (4) befestigt ist, und einen Verbindungsmechanismus, der mit dem vertikal bewegbaren Element verbunden ist, um das vertikal bewegbare Element zum Erkennen der Schwenkbewegung des Rückenlehnenrahmens (6) zu bewegen.

6. Autositz nach Anspruch 5, wobei der Erkennungsmechanismus ein Kabel (52) umfasst, zum miteinander Verbinden des vertikal bewegbaren Elements und des Verbindungselements, und wobei die Schwenkbewegung des Rückenlehnenrahmens (6) zu dem vertikal bewegbaren Element über das Kabel (52) übertragen wird.

## Revendications

1. Siège d'automobile incluant un coussin de siège ayant un cadre de coussin de siège, un dossier de siège monté en basculement sur le coussin de siège, et un appui-tête (11) monté sur une portion supérieure du dossier de siège, ledit siège d'automobile comprenant :
une paire de cadres latéraux (4) montés sur le cadre de coussin de siège ;
un cadre de dossier de siège (6) monté sur la paire de cadres latéraux (4) de manière à être capable de pivoter dans une plage angulaire limitée ;
dans lequel le cadre de dossier de siège (6) est maintenu, dans une condition assise normale, sur la paire de cadres latéraux (4) à une première position et, quand une charge supérieure à une valeur prédéterminée est appliquée depuis l'arrière, le cadre de dossier de siège (6) pivote vers une seconde position différente de la première position pour déplacer ainsi l'appui-tête vers l'avant ;
**caractérisé par** un mécanisme de reconnaissance (38 ; 40, 42 ; 44) monté sur le cadre de dossier de siège ;
de sorte que le fait que le cadre de dossier de siège (6) a pivoté autour d'un centre de mouvement pivotant peut être reconnu avec le mécanisme de reconnaissance.

2. Siège d'automobile selon la revendication 1, comprenant en outre un guide-tige (36) fixé sur le cadre de dossier de siège (6) pour supporter l'appui-tête, dans lequel le mécanisme de reconnaissance comprend une marque de reconnaissance prévue sur le guide-tige (36), et la marque de reconnaissance se déplace ensemble avec le guide-tige (36) avec le mouvement de pivotement du cadre de dossier de siège (6).

3. Siège d'automobile selon la revendication 1, dans lequel le mécanisme de reconnaissance comprend un indicateur (42) monté sur le cadre de dossier de siège (6) à un emplacement en face de l'un de la paire de cadres latéraux (4), et dans lequel l'indicateur (42) peut être vu depuis l'extérieur pour la reconnaissance du mouvement de pivotement du cadre de dossier de siège (6).

4. Siège d'automobile selon la revendication 3, dans lequel le mécanisme de reconnaissance comprend un guide indicateur (40) monte sur le cadre concerné de la paire de cadres latéraux (4) pour guider l'indicateur (42), et dans lequel le mouvement de pivotement du cadre de dossier de siège (6) peut être reconnu avec un mouvement de l'indicateur (42) par rapport au guide indicateur (40).

5. Siège d'automobile selon la revendication 1, dans lequel le mécanisme de reconnaissance comprend un élément verticalement mobile (44) monté sur l'un de la paire de cadres latéraux (4) et un mécanisme de liaison connecté à l'élément verticalement mobile pour déplacer l'élément verticalement mobile pour la reconnaissance du mouvement de pivotement du cadre de dossier de siège (6).

6. Siège d'automobile selon la revendication 5, dans lequel le mécanisme de reconnaissance comprend un câble (52) pour connecter l'élément verticalement mobile et le mécanisme de liaison l'un à l'autre, et dans lequel le mouvement de pivotement du cadre de dossier de siège (6) est transmis à l'élément verticalement mobile via le câble (52).
